**Europäisches Patentamt**

(19) **European Patent Office**

**Office européen des brevets**

(11) Veröffentlichungsnummer: **0 025 425**
**B1**

(12) # EUROPÄISCHE PATENTSCHRIFT

(45) Veröffentlichungstag der Patentschrift:
**18.05.83**

(51) Int. Cl.³: **A 01 G 25/00**, B 05 B 3/06

(21) Anmeldenummer: **80890092.2**

(22) Anmeldetag: **18.08.80**

(54) **Regner.**

(30) Priorität: **30.08.79 AT 5790/79**

(43) Veröffentlichungstag der Anmeldung:
**18.03.81 Patentblatt 81/11**

(45) Bekanntmachung des Hinweises auf die Patenterteilung:
**18.05.83 Patentblatt 83/20**

(84) Benannte Vertragsstaaten:
**DE FR GB IT NL**

(56) Entgegenhaltungen:

**DE-A-2 729 451**
**US-A-3 468 485**
**US-A-3 598 208**

(73) Patentinhaber: **Österreichische Salen-Kunststoffwerk Gesellschaft m.b.H., Kaiserstrasse 45, A-1072 Wien (AT)**

(72) Erfinder: **Figwer, Eduard, Dipl.-Ing., Gebirgsgasse 27, A-1238 Wien (AT)**
Erfinder: **Schmitzberger, Franz, Waldstrasse 26, A-3100 St. Pölten (AT)**

(74) Vertreter: **Kretschmer, Adolf, Dipl.-Ing., Schottengasse 3a, A-1014 Wien (AT)**

Regner

Die Erfindung bezieht sich auf einen Regner mit einem in einem ortsfesten Lagerteil drehbar gelagerten Sprührohr mit wenigstens einer Austrittsdüse, welches durch Umlenkung des austretenden Wassers in Drehung versetzbar ist, und einer Bremseinrichtung, welche die Drehbewegung des Sprührohres durch die innere Reibung einer Flüssigkeit bremst. Regner, welche unter Ausnutzung der Rückstosskraft des austretenden Wasserstrahles betrieben werden, müssen üblicherweise gebremst werden, um eine hinreichende Wurfweite zu erzielen. In aller Regel ist eine Abbremsung der Drehung auf etwa 2 bis 5 min⁻¹ erforderlich. Aus der DE-A-2 729 451 ist es bekannt geworden, bei einem solchen Regner der eingangs genannten Art das Regnerauslassrohr in einem Gleitlager zu führen, welches mit einem hochviskosen Öl gefüllt ist, wobei durch den Ölfilm gleichzeitig die Drehlagerung und die Bremsung bewirkt wird. Bei der bekannten Einrichtung wird die Verwendung von Ölen oder Öl-Bitumen-Gemischen einer Viskosität von 50 bis 5000 Stokes bei 20°C vorgeschlagen. Hierbei muss der Ölfilm so bemessen sein, dass einerseits die Drehlagerung gewährleistet ist und anderseits auch die erforderliche Bremswirkung erreicht wird. Die Konstruktion dieses bekannten Regners erfordert daher eine aufwendig bearbeitete Gleitfläche und es muss dabei sowohl die Innenwand des Lagergehäuses mit geringsten Toleranzen ausgebildet sein, als auch die Aussenwand des Auslassrohres über den Bereich, über welchen dieses Rohr im Gehäuse bzw. im Gleitlager geführt ist, abgedreht werden. In jedem Fall erscheint die für die bekannte Ausbildung erforderliche Massgenauigkeit und Toleranzfreiheit nur mit Metallteilen erzielbar. Da sich überdies die Viskosität des Öles und damit die Bremswirkung mit der Temperatur ändert, ist eine hinreichend genaue Einstellung der Bremswirkung schwierig.

Die Erfindung hat sich nun die Aufgabe gesetzt, einen Regner der eingangs genannten Art in einer Weise auszubilden, dass alle Teile aus Kunststoffen bestehen können und aufwendige Nachbearbeitungen entbehrlich werden. Zur Lösung dieser Aufgabe ist die Erfindung dadurch gekennzeichnet, dass die Drehlagerung des Sprührohres räumlich getrennt von der Bremseinrichtung ausgebildet ist, dass die Bremseinrichtung ein Gehäuse aufweist, welches zumindest teilweise mit einem hochviskosen Öl oder einer Paste gefüllt ist und welches drehfest mit einem ortsfesten Teil der Drehlagerung verbunden ist, dass das Sprührohr dichtend durch das Gehäuse hindurchgeführt ist, und dass mit dem Sprührohr wenigstens ein radialer Fortsatz drehfest gekuppelt ist, welcher innerhalb des Gehäuses mit dem hochviskosen Öl oder der Paste zusammenwirkt. Dadurch, dass die Lagerung räumlich getrennt von der Bremseinrichtung für die Drehbewegung ausgebildet ist, wird die Bremseinrichtung frei von mechanischen Kräften gehalten, da diese Kräfte durch das Lager aufgenommen werden. Es wird auf diese Weise eine einwandfreie Lagerung ermöglicht und die Bremswirkung kann unabhängig von dieser Lagerung frei gewählt werden. Die erfindungsgemässe Ausbildung hat hiebei gegenüber einer Ausbildung, bei welcher das Gleitlager über seine axiale Länge mit hochviskosem Öl gefüllt ist, den Vorteil, dass die Einhaltung von Toleranzen innerhalb der Bremseinrichtung unkritisch ist, da durch den radialen Fortsatz in jedem Fall eine hinreichend grosse Scherbeanspruchung des hochviskosen Öls oder der Paste erfolgen kann, welche die Bremsung der Drehbewegung zur Folge hat. Dieser radiale Vorsprung findet im hochviskosen Öl einen geeigneten Widerstand gegen freie Verdrehung und diese Kräfte werden über einen der radialen Länge dieses Vorsprunges entsprechenden Hebelarm auf das Sprührohr übertragen. Es genügen somit auf Grund dieser günstigeren Übersetzung der Kräfte bereits geringe Scherkräfte, um eine wirkungsvolle Bremsung zu erzielen.

Als hochviskose Öle oder Pasten kommen insbesondere synthetische Öle oder Pasten in Frage, deren rheologische Eigenschaften in einfacher Weise einstellbar sind. Besonders vorteilhaft erscheint der Einsatz von sogenannten dilatanten Medien, deren Viskosität bei zunehmender Scherbeanspruchung steigt. Derartige Medien zeichnen sich im Zusammenhang mit dem erfindungsgemässen Regner dadurch aus, dass nur geringe Kräfte für den Beginn der Drehbewegung bzw. der Rotation des Regners erforderlich sind, dass jedoch mit zunehmender Rotationsgeschwindigkeit eine bedeutende Stabilisierung dieser Rotationsgeschwindigkeit eintritt. Die Verwendung hochviskoser Öle unterscheidet die erfindungsgemässe Bremseinrichtung grundsätzlich von mechanisch vorgespannten Lamellen einer Lamellenkupplung, bei welchen zur Erzielung eines Durchrutschens der einzelnen Lamellen hohe Anfangskräfte zur Überwindung der Haftreibung erforderlich sind und deren Funktion überaus störanfällig ist.

In vorteilhafter Weise ist die Ausbildung hiebei so getroffen, dass das Gehäuse eine im wesentlichen zylindermantelförmige Innenwand aufweist, mit welcher wenigstens ein radial nach innen gerichteter Fortsatz drehfest gekuppelt ist, welcher in Achsrichtung des Sprührohres gegenüber dem oder den drehfest mit dem Sprührohr verbundenen radialen Fortsätzen unter Einhaltung eines Spaltes zwischen einander zugewendeten Stirnflächen in Achsrichtung des Sprührohres benachbarter Fortsätze versetzt angeordnet ist. Durch die zusätzliche Anordnung von radial nach innen gerichteten Fortsätzen an der Innenwand des Gehäuses entsteht bei der Verdrehung dieser Fortsätze jeweils zwischen benachbarten radialen Fortsätzen eine Scherbeanspruchung des in dem Spalt zwischen den einander zugewendeten Stirnflächen der Fortsätze enthaltenen hochviskosen Öles oder der Paste und es wird eine wirkungsvolle Bremsung sichergestellt. Es ist lediglich erforderlich, dass die Fortsätze in Achsrichtung des Sprührohres gesehen, abwechselnd drehfest mit dem Sprührohr und drehfest mit dem Gehäuse verbunden sind, um einen hohen Wirkungsgrad zu erzielen. In einfacher Weise ist die Ausbildung hiebei so getroffen, dass die Fortsätze in einer Radialebene gegenüber den Fortsätzen einer in Achsrichtung benachbarten Radialebene in Umfangsrichtung versetzt und vorzugsweise auf Lücke gestellt gestaffelt angeordnet sind. Auf diese Weise ergibt sich eine relativ kontinuierliche Bremsung über eine volle Umdrehung, wobei der Zusammenbau besonders einfach erfolgen kann, wenn die Fortsätze in einer Drehstellung so angeordnet sind, dass jeweils die mit dem Sprührohr drehfest verbundenen Fortsätze mit den Zwischenräumen zwischen den mit der Innenwand des Gehäuses drehfest verbundenen Fortsätzen fluchten. In diesem Fall kann das Sprührohr einfach in das Gehäuse eingesteckt werden und der dichtende Abschluss kann beispielsweise durch Aufschrauben eines Deckels mit entsprechender Dichtung gegenüber der Aussenwand des Sprührohres erzielt werden. Die Dichtungselemente des Gehäuses können von hochelastischen Dichtungsringen gebildet werden, da die Lagerung von einem gesonderten Bauteil gebildet wird. Derartige Dichtungsringe verhindern mit Sicherheit das Eintreten von Wasser in das Innere des Gehäuses und das Austreten von Öl.

Um eine möglichst gleichförmige Drehbewegung bzw. Bremsung über eine Umdrehung zu sichern, sind vorzugsweise die Zentriwinkel zwischen in Umfangsrichtung benachbarten Fortsätzen einer radialen Ebene verschieden von den Zentriwinkeln der in Umfangsrichtung benachbarten Fortsätze der in Achsrichtung benachbarten Radialebene. Auf diese Weise steht immer ein mit dem Sprührohr gekuppelter Fortsatz mit einem mit dem Gehäuse gekuppelten Fortsatz in Eingriff, sodass in jeder Winkellage der Verdrehung eine Bremswirkung ausgeübt wird.

In besonders einfacher Weise sind die radialen Fortsätze als Ringscheiben mit ebenen Stirnflächen ausgebildet. Vorzugsweise ist die Ausbildung hiebei so getroffen, dass der Aussenmantel des drehbar gelagerten Sprührohres oder ein mit diesem drehfest verbundener Teil längs seiner Erzeugenden über einen Teilbereich seiner Oberfläche wenigstens eine Rippe oder Nut aufweist, welche in eine Nut oder Rippe der mit dem Sprührohr drehfest gekuppelten Ringscheibe(n) eingreift, wobei in einfacher Weise die mit dem ortsfesten Lagerteil drehfest gekuppelten Ringscheiben unter Vermittlung von am Aussenumfang dieser Ringscheiben angeordneten Ausnehmungen oder Vorsprüngen mit Erhebungen oder Nuten an der Innenwand des Gehäuses zusammenwirken können. Die ebenen Stirnflächen der Ringscheiben erlauben eine gleichmässige, gleichförmige Rotationsbewegung. Der zwischen diesen Ringscheiben gebildete Spalt, welcher sich im wesentlichen in einer Radialebene erstreckt, ist mit dem hochviskosen Öl oder einer Paste gefüllt. Kräfte, welche im Sinne eines Zusammenpressens der Ringscheiben wirksam werden könnten, werden von der gesonderten Lagerung aufgenommen und es kann daher das zwischen den Ringscheiben enthaltene hochviskose Öl nicht ausgepresst werden. Für die Ringscheiben ist es lediglich erforderlich, dass sie drehfest in Achsrichtung gesehen abwechselnd mit dem Sprührohr und dem Gehäuse verbunden sind und eine derartige drehfeste Verbindung kann ohne weiteres ein beträchtliches Spiel aufweisen, ohne dass die Funktion der Bremse beeinträchtigt wird.

Zur Aufrechterhaltung des gewünschten Spaltes zwischen benachbarten Stirnflächen ist vorzugsweise der axiale Abstand der Ringscheiben voneinander durch Anschläge begrenzt. Eine derartige Begrenzung durch Anschläge weist gegenüber einer federnden Anpressung der Ringscheiben den Vorteil auf, dass das zwischen den Ringscheiben enthaltene hochviskose Öl durch mechanische Kräfte nicht ausgepresst wird.

In besonders einfacher Weise ist die Ausbildung so getroffen, dass das Gehäuse geteilt ausgebildet ist und die Stirnwände des Gehäuses die Anschläge für die Einhaltung der axialen Abstände der Ringscheiben voneinander bilden. Die Unterteilung des Gehäuses kann hiebei durch einen abschraubbaren Deckel gebildet sein. Das im wesentlichen zylindrische Gehäuse kann aber auch längs einer Erzeugenden des Mantels aufklappbar ausgebildet sein und an seinem Innenmantel die den mit dem Gehäuse drehfest verbundenen Ringscheiben entsprechenden radial nach innen ragenden Rippen aufweisen, welche jeweils zwischen den mit dem Sprührohr drehfest verbundenen Ringscheiben eingreifen.

Vorzugsweise bestehen das Gehäuse und die radialen Fortsätze oder Ringscheiben aus ölbeständigen Kunststoffen, beispielsweise Polyacetal.

Die Drehkräfte können in einfacher Weise dadurch gebildet werden, dass das Sprührohr gekröpft ausgebildet ist. Es können aber auch längs einer Erzeugenden des Mantels des Sprührohres an einer Seite eine oder mehrere Austrittsöffnungen zur Erzielung der Drehkraft angeordnet werden. Die Drehkräfte können aber auch beispielsweise dadurch ausgebildet werden, dass in den Strömungsweg des austretenden Wassers eine Leiteinrichtung eingeschaltet ist.

Gemäss einer bevorzugten Weiterbildung des erfindungsgemässen Regners ist die Ausbildung so getroffen, dass mit den radialen Fortsätzen im wesentlichen axial gerichtete konzentrisch angeordnete Fortsätze verbunden sind, wobei der Achsabstand der axial gerichteten Fortsätze der drehfest mit dem Sprührohr verbundenen radialen Fortsätze verschieden vom Achsabstand von gegebenenfalls vorgesehenen axial gerichteten Fortsätzen von radialen Teilen des ortsfest gelagerten Teiles ist. Eine derartige Ausbildung lässt sich herstellungstechnisch besonders leicht realisieren, da dosenförmige hohlzylindrische bzw. in Achsrichtung verlaufende Fortsätze leicht entformt werden können. Die jeweils einander gegenüberliegenden axial gerichteten Fortsätze bilden hiebei eine besonders grosse Friktionsfläche, wobei die jeweils feststehenden axial gerichteten Fortsätze in die Zwischenräume der mit dem Sprührohr drehfest verbundenen axial gerichteten Fortsätze in radialer Richtung gesehen, eingreifen. Gemäss einer bevorzugten Weiterbildung dieser Ausgestaltung sind die axial gerichteten Fortsätze von Stegen gebildet, welche sich im wesentlichen über die gesamte axiale Länge der Bremseinrichtung erstrecken, wobei in einem jeweiligen Achsabstand über den entsprechenden Hüllkreisumfang verteilt mehrere Stege angeordnet sind. Dadurch, dass die

axial gerichteten Fortsätze von Stegen gebildet sind, wird die Friktion solcher einander gegenüberliegender Stege bei jeder Umdrehung mehrmals unterbrochen, weil derartige Stege nun keine durchgehende Zylindermantelfläche mehr darstellen. Eine derartige Unterbrechung der Reibungsbremsung bringt bezüglich des Bremsverhaltens bei vielen als Viskosemedien in Frage kommenden Ölen oder Pasten bedeutende Vorteile mit sich. Beispielsweise weisen nämlich Silikonöle thixotrope Eigenschaften auf und haben die Tendenz, sich bei konstanter Scherbelastung gleichmässig zu orientieren. Eine derartige Ortho-Orientierung des viskosen Mediums tritt aber nun bei diskontinuierlicher Scherbeanspruchung des Mediums nicht auf, wodurch der Bremseffekt auch bei viskosen Medien mit thixotropen Eigenschaften über die Zeit weitgehend konstant gehalten wird. Vorzugsweise erstrecken sich hiebei die auf verschiedenem Achsabstand angeordneten axial gerichteten Stege in Umfangsrichtung des jeweiligen Hüllkreises über den gleichen Zentriwinkel. Auf diese Weise sind die in Radialrichtung auf verschiedenem Achsabstand angeordneten Stege unter Berücksichtigung des wirkenden Hebelarmes gleichmässig belastet.

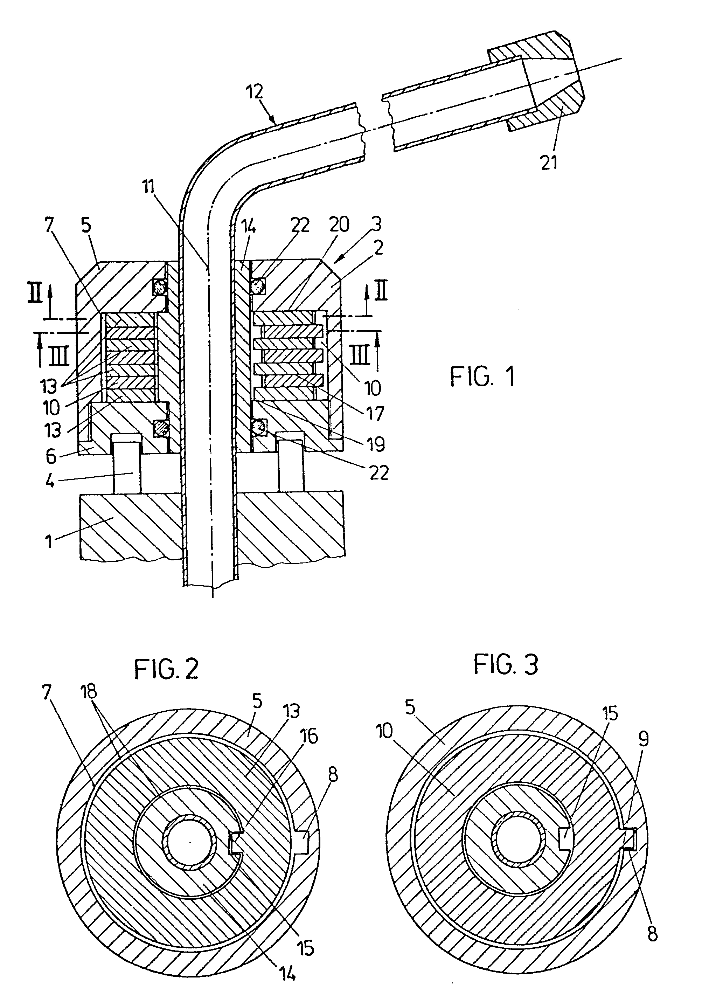

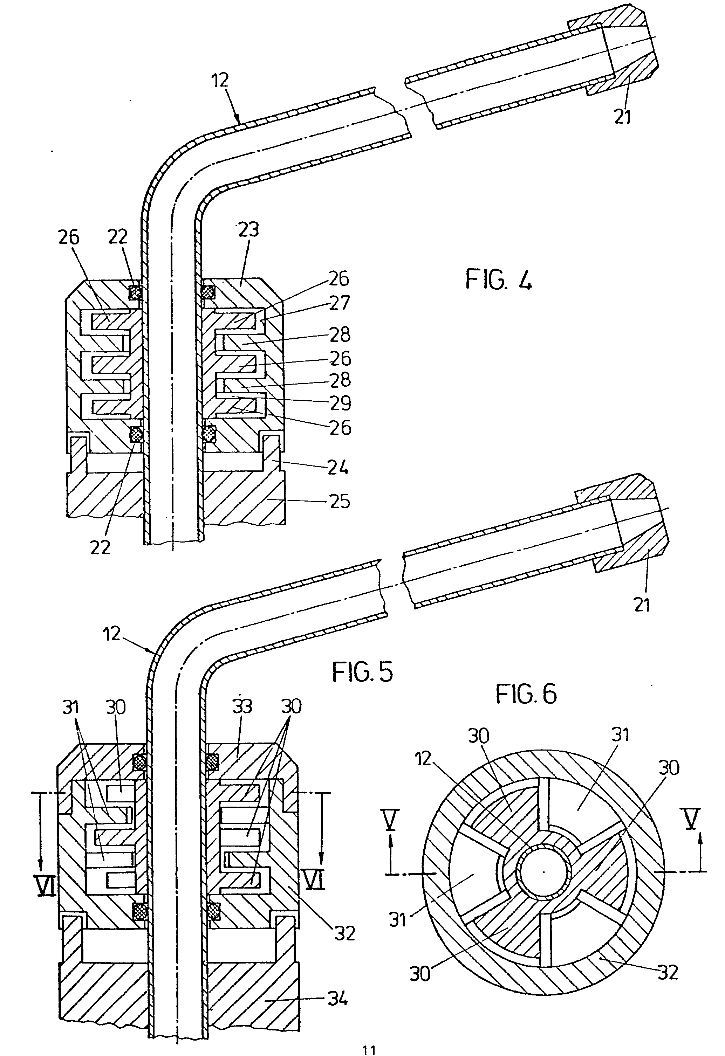

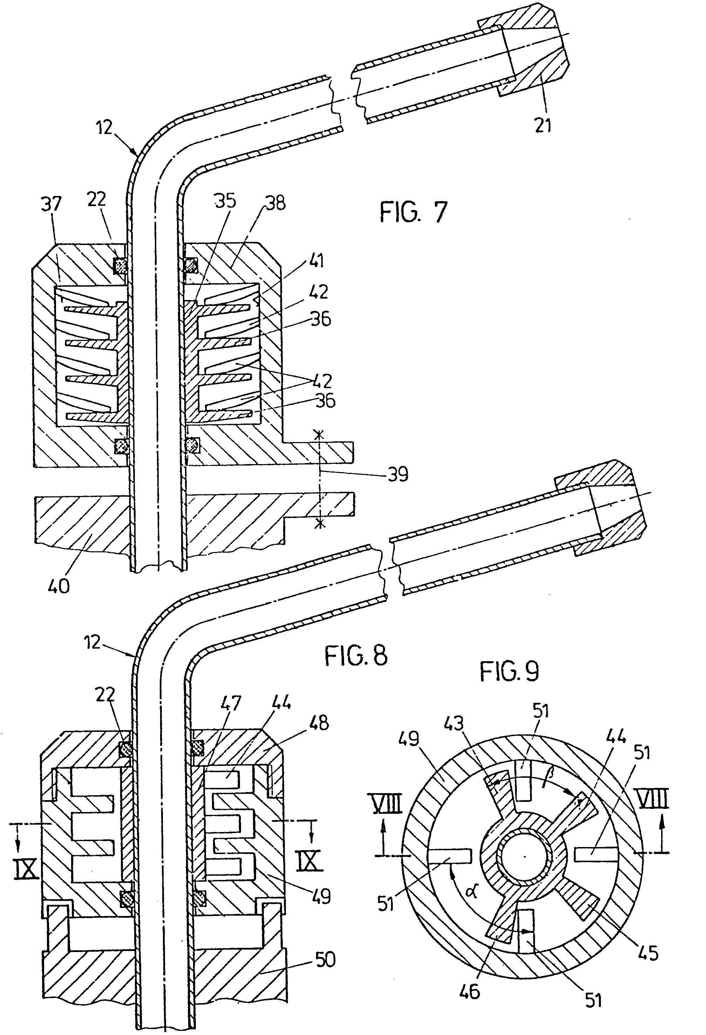

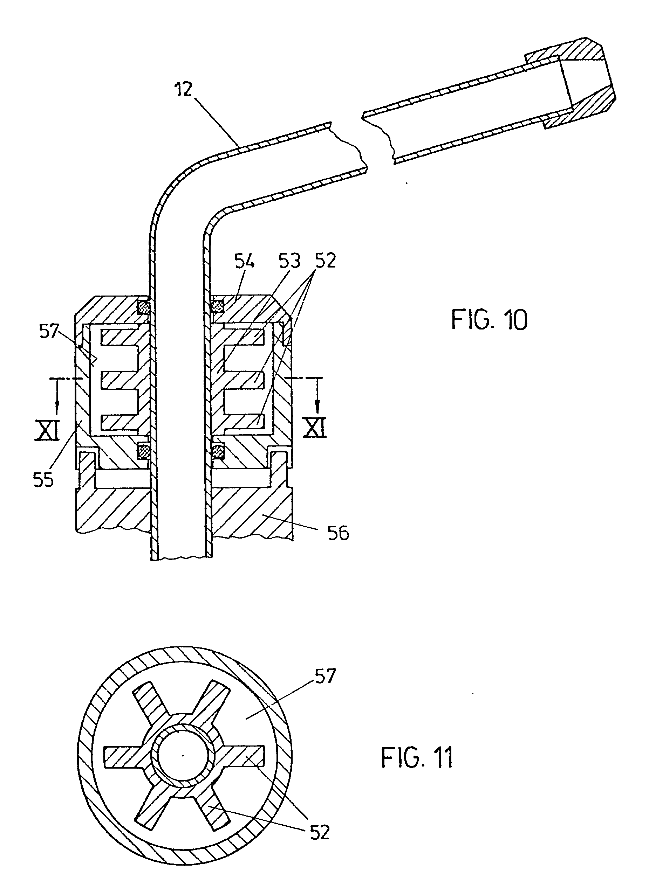

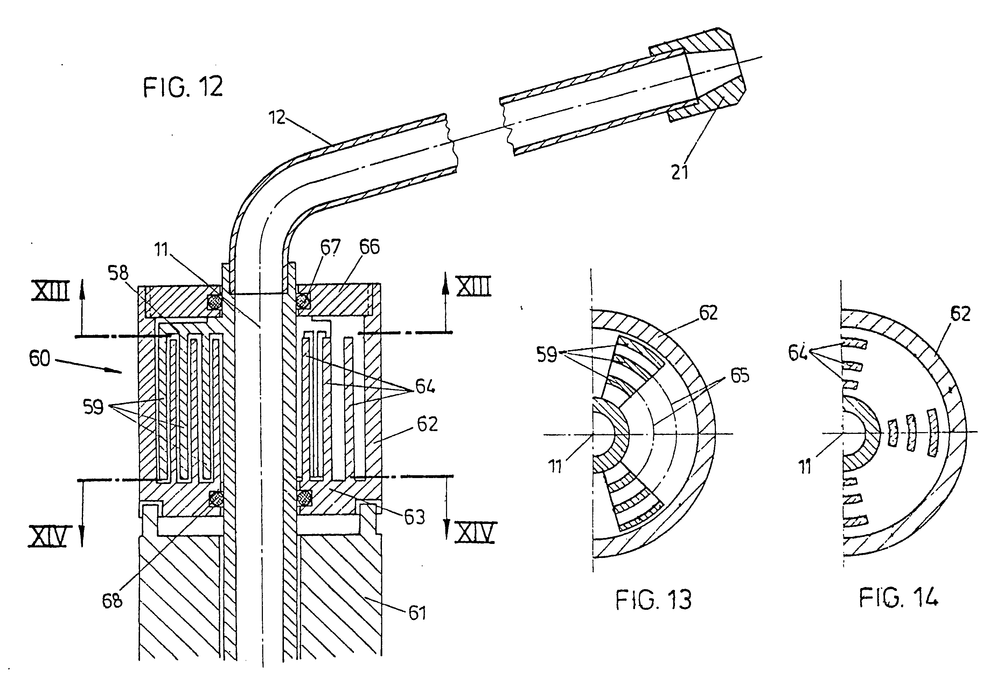

Die Erfindung wird nachfolgend an Hand von in der Zeichnung dargestellten Ausführungsbeispielen, welche weitere erfindungswesentliche Details zeigen, näher erläutert. In dieser zeigen Fig. 1 einen Schnitt durch einen erfindungsgemässen Regner, Fig. 2 einen Schnitt nach der Linie II-II der Fig. 1, Fig. 3 einen Schnitt nach der Linie III-III der Fig. 1, Fig. 4 einen Schnitt durch eine abgewandelte Ausführungsform eines erfindungsgemässen Regners, Fig. 5 und 6 eine weitere Ausführungsform, wobei Fig. 5 einen Schnitt nach der Linie V-V der Fig. 6 und Fig. 6 einen Schnitt nach der Linie VI-VI der Fig. 5 darstellt, Fig. 7 einen Schnitt durch eine abgewandelte Ausführungsform analog den Darstellungen der Fig. 1, 4 und 5, Fig. 8 und 9 Schnitte durch eine weitere Ausführungsform, wobei Fig. 8 einen Schnitt nach der Linie VIII-VIII der Fig. 9 und Fig. 9 einen Schnitt nach der Linie IX-IX der Fig. 8 darstellt, Fig. 10 und 11 eine weitere Ausbildung, wobei Fig. 10 einen Längsschnitt und Fig. 11 einen Schnitt nach der Linie XI-XI der Fig. 10 darstellt, und Fig. 12 bis 14 eine weitere Ausführungsform, wobei Fig. 12 einen Längsschnitt und Fig. 13 und 14 Schnitte nach XIII-XIII und XIV-XIV darstellen.

In Fig. 1 ist mit 1 ein ortsfester Lagerteil bezeichnet. Das Gehäuse 2 der Bremseinrichtung 3 ist über Zapfen 4 drehfest mit dem ortsfesten Lagerteil verbunden. Das Gehäuse 2 weist einen Deckel 5 und einen mit diesem Deckel verschraubten Basisteil 6 auf, in welchen die Zapfen 4 drehschlüssig eingreifen. Die im wesentlichen zylindrische Innenwand 7 des Gehäusedeckels 5 weist eine Nut 8 auf, in welche Fortsätze 9 von Ringscheiben 10 eingreifen. Die Ringscheiben 10 sind auf diese Weise drehfest mit der Innenwand 7 des Gehäuses verbunden. In Richtung der Achse 11 des Sprührohres 12 sind jeweils zwischen Ringscheiben 10 mit dem Sprührohr 12 drehschlüssig gekuppelte Ringscheiben 13 angeordnet. Die drehschlüssige Kupplung erfolgt hiebei dadurch, dass eine mit dem Sprührohr 12 starr verbundene Büchse 14 an ihrem Aussenumfang eine Nut 15 aufweist, in welche nach innen ragende Vorsprünge 16 der Scheiben 13 eingreifen. Die zwischen den in Achsrichtung benachbarten Stirnflächen der Ringscheiben 10 und 13 gebildete Spalte 17 ist ebenso wie der gesamte Innenraum 18 des Gehäuses mit einem hochviskosen Öl oder einer hochviskosen Paste gefüllt und die Breite der Spalte wird durch die nach innen gerichteten Stirnflächen 19 und 20 des Grundkörpers sowie des Deckels des Gehäuses begrenzt. Bei Verdrehung des Sprührohres 12, dessen Sprühdüse mit 21 bezeichnet ist, üben die Ringscheiben 13 auf das in den Spalten 17 enthaltene hochviskose Öl bzw. die Paste Scherkräfte aus und diese Scherkräfte ergeben auf Grund der Viskosität des Mediums eine Bremsung der Drehbewegung des Sprührohres 12. Das Sprührohr 12 ist hiebei in nicht näher dargestellter Weise gekröpft ausgebildet, um einen entsprechenden Rückstoss und damit eine Drehbewegung zu erzielen. Die Büchse 14 ist gegenüber dem Gehäuse 2 durch Dichtungsringe 22 gegen eintretendes Wasser und Austreten von Öl abgedichtet. Die Details dieser Ausführung sind in den Fig. 2 und 3 näher dargestellt, wobei die Bezugszeichen der Fig. 1 beibehalten wurden.

In Fig. 4 ist eine Ausbildung dargestellt, bei welcher ein längs einer Erzeugenden des Mantels aufklappbares Gehäuse 23 Verwendung findet, welches über die Vorsprünge 24 des ortsfesten Lagerteiles 25 drehschlüssig mit dem Lager verbunden ist. Das Sprührohr 12 ist hiebei unmittelbar mit einem radialen Fortsatz in Form eines Ringrippen 26 tragenden Bauteiles drehfest verbunden, wobei dieser Bauteil beispielsweise auf das Sprührohr 12 aufgekeilt sein kann, oder mit der Aussenwand des Sprührohres verklebt oder auf diese Aussenwand aufgeschrumpft sein kann. Das Gehäuse 23 weist an seiner im wesentlichen zylindrischen Innenwand 27 radial nach innen ragende Rippen 28 auf, deren Ebene in Achsrichtung des Sprührohres 12 versetzt angeordnet sind, sodass zwischen den benachbarten miteinander zusammenwirkenden Fortsätzen 26 und 28 jeweils ein Spalt 29 gebildet wird, welcher wiederum mit hochviskosem Öl oder einer Paste gefüllt ist. Das Gehäuse ist in analoger Weise wie bei der Ausbildung nach Fig. 1 durch Dichtungsringe 22 gegen Eindringen von Wasser und Austreten von Öl geschützt.

Bei der Ausbildung nach Fig. 5 und 6 sind zum Unterschied von der Ausbildung nach Fig. 4 in jeder Ebene drei bezüglich der Achse symmetrisch angeordnete Fortsätze vorgesehen, wobei die Fortsätze 30 drehfest mit dem Sprührohr 12 und die Fortsätze 31 drehfest mit dem Basisteil 32 des Gehäuses verbunden sind. Das Gehäuse weist bei dieser Ausbildung in analoger Weise wie bei der Ausbildung nach Fig. 1 einen Deckel 33 auf, da bei dieser Ausführungsform der Zusammenbau in axialer Richtung möglich ist, wenn die Ausbildung wie in Fig. 5 dargestellt, so getroffen ist, dass die mit dem Sprührohr drehfest verbundenen Fortsätze 30 in Achsrichtung des Sprührohres zwischen die in Umfangsrichtung ausgebildeten Zwischenräume zwischen den Fortsätzen 31 des Gehäuses eintreten können. Die Fortsätze 30 und 31 sind in Achsrichtung gesehen in verschiedenen radialen Ebenen in verschiedenen Drehlagen angeordnet, so dass beim Zusammenbau neben einem axialen Einschieben jeweils ein Verdrehen der mit dem Sprührohr 12 drehfest verbundenen Fortsätze 30 erforderlich ist, um an den in Achsrichtung nachfolgenden Fortsätzen 31 vorbei das Einschieben in das Gehäuse zu ermöglichen. Der Basisteil 32 des Gehäuses ist wiederum drehfest mit einem ortsfesten Lagerteil 34 verbunden.

Bei der Ausführung nach Fig. 7 ist mit dem Sprührohr 12 drehfest ein Bauteil 35 verbunden, welcher radiale Rippen 36 aufweist. Diese radialen Rippen 36 erstrecken sich in den Innenraum 37 eines Gehäuses 38, welches über eine exzentrische mit 39 angedeutete Schraube mit dem starren Lagerteil 40 verbunden ist. An der Innenwand 41 des Gehäuses 38 sind im wesentlichen radial nach innen vorragende geschlitzte federnde Rippen 42 angedeutet. Die Verdrehung des Bauteiles 35 innerhalb des im Innenraum 37 enthaltenen hochviskosen Mediums führt auf Grund der Rippen 36 zu einer Scherbeanspruchung des hochviskosen Mediums. Die Haftung des hochviskosen Mediums an der zylindrischen Innenwand 41 des Gehäuses 38 verhindert ein Mitdrehen des hochviskosen Mediums. Dieser Effekt wird dadurch noch verbessert, dass die federnden Vorsprünge 42, welche drehfest an das Gehäuse angeschlossen sind, geschlitzt ausgebildet sind und jeweils Kammern für das hochviskose Medium ausbilden und so ein freies Mitdrehen des hochviskosen Mediums verhindern.

Bei der Ausführungsform nach den Fig. 8 und 9 schliesslich ist das Sprührohr 12 wiederum mit einem radiale Fortsätze 43, 44, 45 und 46 tragenden Bauteil 47 drehfest, beispielsweise durch Aufschrumpfen, verbunden. Das Gehäuse weist wiederum einen Deckel 48 und einen Basisteil 49 auf, welcher drehfest mit dem ortsfesten Lagerteil 50 verbunden ist. Die Innenwand des Gehäuses weist nach innen ragende Fortsätze 51 auf, welche in Achsrichtung des Sprührohres jeweils zwischen den Ebenen der Fortsätze 43, 44, 45 und 46 angeordnet sind. Die radialen Fortsätze 51 des Gehäuses sind hiebei in regelmässigen Abständen, das heisst, unter Einhaltung eines konstanten Zentriwinkels $\alpha$ angeordnet, wohingegen der Zentriwinkel $\beta$ zwischen den Fortsätzen 43 und 44 von diesem Zentriwinkel $\alpha$ abweicht. Auf diese Weise kann durch die Mehrzahl der mit dem Sprührohr 12 drehfest verbundenen Fortsätze sichergestellt werden, dass jeweils zumindest ein Fortsatz 43, 44, 45, 46 mit wenigstens einem Fortsatz 51 in der Draufsicht gesehen in Deckung gelangt, wobei das zwischen den ortsfesten Fortsätzen und den drehschlüssig mit dem Sprührohr verbundenen Fortsätzen enthaltene hochviskose Medium auf Scherung beansprucht wird.

Bei der Ausbildung nach Fig. 10 und 11 ist das Sprührohr 12 wieder mit einem radiale Fortsätze 52 tragenden Bauteil 53 drehfest, z.B. durch Aufschrumpfen, verbunden. Das Gehäuse weist wieder einen Deckel 54 und einen Basisteil 55 auf, welcher drehfest mit dem ortsfesten Lagerteil 56 verbunden ist. Die Innenwand 57 des Gehäuses weist keine nach innen ragende Fortsätze auf. Der Innenraum 57 des Gehäuses ist mit einem hochviskosen Medium gefüllt, so dass eine Verdrehung des Sprührohres 12 bzw. die Verdrehung der Fortsätze 52 zu einer Scherbeanspruchung des hochviskosen Mediums führt und die gewünschte Bremsung der Drehbewegung herbeiführt.

Als hochviskose Öle oder Pasten kommen in erster Linie synthetische Öle mit einer Viskosität von 50 bis 10 000 Stokes, vorzugsweise etwa 2000 bis 5000 Stokes, bei 20°C in Frage.

In den Fig. 12 bis 14 ist eine weitere Ausführungsform eines Regners gemäss der Erfindung dargestellt. Bei dieser Ausführung ist mit dem Sprührohr 12 ein radialer Fortsatz 58 drehfest verbunden. Der radiale Fortsatz 58 trägt nun in Richtung der Achse 11 sich erstreckende Stege 59, welche sich im wesentlichen über die gesamte axiale Länge der Bremsvorrichtung 60 erstrecken. Mit einem Lagerbock 61 ist ein ortsfest gelagerter Gehäuseteil 62 verbunden, dessen radial verlaufender Teil 63 wiederum in Richtung der Achse 11 verlaufende Fortsätze bzw. Stege 64 trägt. Die axial verlaufenden Fortsätze sind hiebei in Achsabständen von der Achse 11 angeordnet, welche von den Achsabständen der axial verlaufenden Fortsätze 59 verschieden ist, sodass diese axial verlaufenden Fortsätze 59 und 64 bei Drehung des Sprührohres 12 miteinander kämmen. Das Gehäuse 62 ist wiederum mit einem hochviskosen Öl oder einer Paste gefüllt. Wie aus den Fig. 13 und 14 hervorgeht, erstrecken sich die axial gerichteten Fortsätze 59 und 64, welche in verschiedenen Achsabständen von der Achse 11 angeordnet sind, jeweils über den gleichen Zentriwinkel in Umfangsrichtung des zugehörigen Hüllkreises 65.

Das Gehäuse dieses Regners ist durch einen Deckelteil 66 geschlossen und über Dichtungen 67 und 68 gegen Eindringen von Wasser geschützt. Da die Reibung sich zwischen im wesentlichen axial verlaufenden Stegen ausbildet, ist diese Ausbildung gegen Eindringen von Wasser aber weit weniger empfindlich, als eine Ausführung mit lediglich radial verlaufenden Fortsätzen.

**Patentansprüche**

1. Regner mit einem in einem ortsfesten Lagerteil drehbar gelagerten Sprührohr (12) mit wenigstens einer Austrittsdüse (21), welches durch Umlenkung des austretenden Wassers in Drehung versetzbar ist und einer Bremseinrichtung, welche die Drehbewegung des Sprührohres (12) durch die innere Reibung eines hochviskosen Öls oder einer Paste bremst, dadurch gekennzeichnet, dass die Drehlagerung des Sprührohres (12) räumlich getrennt von der Bremseinrichtung ausgebildet ist, dass die Bremseinrichtung ein Gehäuse (2, 23, 38, 54) aufweist, welches zumindest teilweise mit dem hochviskosen Öl oder der Paste gefüllt ist und welche drehfest mit einem ortsfesten Teil (1, 25, 40, 50, 56) der Drehlagerung verbunden ist, dass das Sprührohr (12) dichtend durch das Gehäuse hindurchgeführt ist, und dass mit dem Sprührohr (12) wenigstens ein radialer Fortsatz (13, 26, 30, 36, 43 - 46, 52) drehfest gekuppelt ist, welcher innerhalb des Gehäuses mit dem hochviskosen Öl oder der Paste zusammenwirkt.

2. Regner nach Anspruch 1, dadurch gekennzeichnet, dass das Gehäuse (2, 23) eine im wesentlichen zylindermantelförmige Innenwand (7, 27) aufweist, mit welcher wenigstens ein radial nach innen gerichteter Fortsatz (10, 28) drehfest gekuppelt ist, welcher in Achsrichtung des Sprührohres (12) gegenüber dem oder den drehfest mit dem Sprührohr verbundenen radialen Fortsätzen (13, 30) unter Einhaltung eines Spaltes (17, 29) zwischen einander zugewendeten Stirnflächen in Achsrichtung des Sprührohres benachbarter Fortsätze versetzt angeordnet ist.

3. Regner nach Anspruch 1 oder 2, dadurch gekennzeichnet, dass die Fortsätze (30, 31) in einer Radialebene gegenüber den Fortsätzen einer in Achsrichtung benachbarten Radialebene in Umfangsrichtung versetzt und vorzugsweise auf Lücke gestellt gestaffelt angeordnet sind.

4. Regner nach Anspruch 2 oder 3, dadurch gekennzeichnet, dass die Zentriwinkel ($\alpha$) zwischen in Umfangsrichtung benachbarten Fortsätzen (51) einer radialen Ebene verschieden von den Zentriwinkeln ($\beta$) der in Umfangsrichtung benachbarten Fortsätze (43 bis 46) der in Achsrichtung benachbarten Radialebene sind.

5. Regner nach Anspruch 1 oder 2, dadurch gekennzeichnet, dass die radialen Fortsätze als Ringscheiben (10, 13) mit ebenen Stirnflächen ausgebildet sind.

6. Regner nach einem der Ansprüche 1, 2 oder 5, dadurch gekennzeichnet, dass die mit dem ortsfesten Lagerteil (1) drehfest gekuppelten Ringscheiben (10) unter Vermittlung von am Aussenumfang dieser Ringscheiben angeordneten Ausnehmungen oder Vorsprünge (9) mit Erhebungen oder Nuten (8) an der Innenwand (7) des Gehäuses (2) zusammenwirken.

7. Regner nach einem der Ansprüche 5 oder 6, dadurch gekennzeichnet, dass das Gehäuse (23) geteilt ausgebildet ist und die Stirnwände des Gehäuses die Anschläge für die Einhaltung der axialen Abstände der Ringscheiben voneinander bilden.

8. Regner nach einem der Ansprüche 1 bis 7, dadurch gekennzeichnet, dass mit den radialen Fortsätzen (58) im wesentlichen axial gerichtete konzentrisch angeordnete Fortsätze (59) verbunden sind, wobei der Achsabstand der axial gerichteten Fortsätze (59) der drehfest mit dem Sprührohr (12) verbundenen radialen Fortsätze (58) verschieden vom Achsabstand von gegebenenfalls vorgesehenen axial gerichteten Fortsätzen (64) von radialen Teilen (63) des ortsfest gelagerten Teiles (62) ist.

9. Regner nach Anspruch 8, dadurch gekennzeichnet, dass die axial gerichteten Fortsätze (59, 64) von Stegen gebildet sind, welche sich im wesentlichen über die gesamte axiale Länge der Bremseinrichtung (60) erstrecken, wobei in einem jeweiligen Achsabstand über den entsprechenden Hüllkreisumfang (65) verteilt mehrere Stege (59, 64) angeordnet sind.

10. Regner nach Anspruch 9, dadurch gekennzeichnet, dass die auf verschiedenem Achsabstand angeordneten axial gerichteten Stege (59, 64) sich in Umfangsrichtung des jeweiligen Hüllkreises (65) über den gleichen Zentriwinkel erstrecken.

**Claims**

1. A sprinkler comprising a spray pipe (12) being rotatably supported in a stationary bearing member and having at least one outlet nozzle (21), said spray pipe (12) being rotatable by the deflection of water being discharged, and comprising braking means braking the rotary movement of the spray pipe (12) by interal friction of a high-viscosity oil or a paste, characterized in that the pivot bearing of the spray pipe (12) is spaced from the braking means, that the braking means comprises a housing (2, 23, 38, 54) which is at least partially filled with said high-viscosity oil or the paste and which is non-rotatably connected to a stationary member (1, 25, 40, 50, 56) of the pivot bearing, that the spray pipe (12) extends through the housing in sealed relation thereto and that at least one radial extension (13, 26, 30, 36, 43 - 46, 52) is non-rotatably connected to the spray pipe and cooperates with the high-viscosity oil or the paste within the housing.

2. A sprinkler as claimed in claim 1, characterized in that the housing (2, 23) has a substantially cylindrical circumferential inside surface (7, 27) to which is non-rotatably coupled at least one radially inwardly directed extension (10, 28) which is spaced in the axial direction of the spray pipe (12) from the radial extension or extensions (13, 30) which is or are non-rotatably connected to the spray pipe to form a gap (17, 28) between mutually confronting faces of adjacent extensions.

3. A sprinkler as claimed in claim 1 or 2, characterized in that the extensions (30, 31) of a given radial plane are circumferentially offset, preferably staggered, with respect to the extensions of an axially adjacent radial plane.

4. A sprinkler as claimed in claim 2 or 3, characterized in that the angular widths ($\alpha$) between circumferentially adjacent extensions (51) of a given radial plane differ from the angular widths ($\beta$) of the circumferentially adjacent extensions (43 to 46) of an axially adjacent radial plane.

5. A sprinkler as claimed in claim 1 or 2, characterized in that the radial extensions consist of annular disks (10, 13) having flat faces.

6. A sprinkler as claimed in claim 1, 2 or 5, characterized in that the annular disks (10) which are non-rotatably connected to the stationary bearing member (1) cooperate by means of recesses or projections (9) at the circumferential outside surface of said annular disks with elevations or grooves (8) at the inside surface (7) of the housing (2).

7. A sprinkler as claimed in claim 5 or 6, characterized in that the housing (23) is split and the axial end walls of the housing form the stops for keeping the annular disks axially spaced apart.

8. A sprinkler as claimed in any one of claims 1 to 7, characterized in that substantially axially directed, concentrically arranged extensions (59) are connected to the radial extensions (58), and the axial extensions (59) connected to the radial extensions (58) that are non-rotatably connected to the spray pipe (12) are spaced at different distances from the axis than any axial extensions (64) connected to radial portions (68) of the stationary part (62).

9. A sprinkler as claimed in claim 8, characterized in that the axial extensions (59, 64) consist of webs which extend substantially throughout the axial lenght of the braking means (60), and a plurality of webs (59, 64) spaced at a given distance from the axis are circumferentially spaced apart on the respective enveloping circle perimeter (65).

10. A sprinkler as claimed in claim 9, characterized in that the axial webs (59, 64) spaced at different distances from the axis extend through the same angular width in the circumferential direction of the respective enveloping circles (65).

## Revendications

1. Arroseur comportant un tube de pulvérisation (12) monté rotatif sur un élément de palier fixe et comportant au moins une buse de sortie (21), qui peut être entrainée en rotation par deviation de l'eau sortante, et un dispositif de freinage qui freine le mouvement de rotation du tube de pulvérisation (12) par suite du frottement intérieur d'une huile à haute viscosité ou d'une pâte, caractérisé en ce que le support en rotation du tube de pulvérisation (12) est réalisé en étant séparé dans l'espace par rapport au dispositif de freinage, que le dispositif de freinage comporte un boîtier (2, 23, 38, 54) qui est rempli au moins partiellement par l'huile à haute viscosité ou la pâte et qui est relié avec blocage en rotation à une partie fixe (1, 25, 42, 50, 56) du support en rotation, que le tube de pulvérisation (12) traverse de façon étanche le boîtier, et qu'au tube de pulvérisation (12) est accouplé, avec blocage en rotation, au moins un prolongement radial (13, 26, 30, 36, 43 - 46, 52) qui coagit à l'intérieur du boîtier avec l'huile à haute viscosité ou avec la pâte.

2. Arrosseur selon la revendication 1, caractérisé en ce que le boîtier (2, 25) comporte une paroi intérieure (7, 27) essentiellement en forme d'enveloppe cylindrique et à laquelle est accouplé, avec blocage en rotation, au moins un prolongement (10, 28) dirigé radialement vers l'intérieur et qui est disposé suivant la direction axiale du tube de pulvérisation (12) en étant décalé par rapport au ou aux prolongements radiaux (13, 20) reliés avec blocage en rotation au tube de pulvérisation, moyennant le maintien d'une fente (17, 29) entre des surfaces frontales, tournées l'une vers l'autre, de prolongements voisins suivant la direction axiale du tube de pulvérisation.

3. Arrosseur selon la revendication 1 ou 2, caractérisé en ce que les prolongements (30, 31) situés dans un plan radial sont décalés suivant la direction périphérique par rapport aux prolongements situés dans un plan radial voisin suivant la direction axiale et par rapport à ceux-ci, sont de préférence échelonnés en étant disposés en chicane.

4. Arrosseur selon la revendication 2 ou 3, caractérisé en ce que les angles au centre ($\alpha$) entre des prolongements (51) voisins suivant la direction périphérique, d'un plan radial diffèrent des angles au centre ($\beta$) des prolongements (43 et 46) voisins, suivant la direction circonférentielle, du plan radial voisin suivant la direction axiale.

5. Arrosseur selon la revendication 1 ou 2, caractérisé en ce que les prolongements radiaux sont réalisés sous la forme de disques annulaires (10, 13) comportant des surfaces frontales planes.

6. Arrosseur selon l'une des revendication 1, 2 ou 5, caractérisé en ce que les disques annulaires (10) accouplés avec blocage en rotation à l'élément de palier fixe (1) coagissent par l'intermédiaire d'évidements ou de parties saillantes (9), disposés sur le pourtour extérieur de ces disques annulaires, avec des renflements ou des rainures (8) situés sur la paroi intérieure (7) du boîtier (2).

7. Arrosseur selon l'une des revendications 5 et 6, caractérisé en ce que le boîtier (3) est réalisé en étant subdivisé et que les parois frontales du boîtier forment les butées pour le maintien des distances axiales réciproque des disques annulaires.

8. Arrosseur selon l'une des revendications 1 à 7, caractérisé en ce qu'aux prolongements radiaux (58) sont reliés des prolongements (59) disposés concentriquement et dirigés essentiellement axialement, la distance, par rapport à l'axe, des prolongements (59) dirigés axialement des prolongements radiaux (58) reliés avec blocage en rotation au tube de pulvérisation (12) étant différente de la distance, par rapport à l'axe, des prolongements (64) dirigés axialement, éventuellement prévus, de parties radiales (63) de la partie montée fixe (62).

9. Arrosseur selon la revendication 8, caractérisé en ce que les prolongements (59, 64) dirigés axialement sont constitués par des barrettes qui s'étendent essentiellement sur toute la longueur axiale du dispositif de freinage (60), plusieurs barrettes (59, 64) étant disposées en étant réparties à des distances respectives par rapport à l'axe, sur le pourtour circulaire formant enveloppe (65) correspondant.

10. Arrosseur selon la revendication 9, caractérisé en ce que les barrettes (59, 64) dirigées axialement et disposées à des distances différentes par rapport à l'axe s'étendent suivant la direction périphérique du cercle-enveloppe respectif (65) sur le même angle au centre.

0 025 425

FIG. 1

FIG. 2

FIG. 3

9

0 025 425

FIG. 4

FIG. 5

FIG. 6

11

FIG. 7

FIG. 8

FIG. 9

FIG. 10

FIG. 11

FIG. 12

FIG. 13

FIG. 14